# EUROPÄISCHE PATENTANMELDUNG

(11) **EP 2 144 206 A1**
(43) Veröffentlichungstag der Anmeldung: **13.01.2010**
(21) Anmeldenummer: 09100289.9
(22) Anmeldetag: 25.05.2009
(51) Int. Cl.: G07F 7/00, G07C 9/00, G06F 21/00, B60R 25/00, G07F 7/08

(54) **Freischaltung von Funktionen in einem Fahrzeug**

(30) Priorität: 08.07.2008 DE 102008040236
(71) Anmelder: Robert Bosch GmbH, 70469 Stuttgart (DE)
(72) Erfinder: Rebsch, Johannes-Christof, 30161, Hannover (DE)

(57) **Zusammenfassung**

Vorgeschlagen werden
ein Verfahren zur Identifizierung eines Benutzers in einem Fahrzeug (1), wobei ID-Informationen von einem personenbezogenen ID-Dokument (20) gelesen werden, welches ID-Dokument (20) maschinenlesbare personenbezogene ID-Informationen aufweist, und wobei im Fahrzeug (1) Funktionen (2, 3, 4) in Abhängigkeit der gelesenen ID-Informationen freigegeben und/oder ausgelöst werden,
die Verwendung eines personenbezogenen ID-Dokuments (20) zur Identifizierung eines Benutzers in einem Fahrzeug (1), wobei im Fahrzeug Mittel (12) zur Erfassung von in einem Speicher (21) des ID-Dokuments (20) abgelegten ID-Informationen vorgesehen sind und wobei Im Fahrzeug (1) Funktionen (2, 3, 4) in Abhängigkeit der von einem ID-Dokument (20) erfassten ID-Informationen freigegeben und/oder ausgelöst werden und
eine Anordnung zur Identifizierung eines Benutzers in einem Fahrzeug (1), mit einem Lesegerät (12) zum Lesen von ID-Informationen von einem personenbezogenen ID-Dokument (20), welches ID-Dokument (20) maschinenlesbare personenbezogene ID-Informationen aufweist, und mit Mitteln (11) zur Freigabe oder zum Auslösen von Funktionen (2, 3, 4) im Fahrzeug (1) in Abhängigkeit der gelesenen ID-Informationen.

## Beschreibung

### Stand der Technik

Die Erfindung geht von einem Verfahren zur Identifizierung eines Benutzers in einem Fahrzeug, von einer Verwendung eines personenbezogenen ID-Dokuments zur Identifizierung eines Benutzers in einem Fahrzeug und einer Anordnung zur Identifizierung eines Benutzers in einem Fahrzeug nach der Gattung der unabhängigen Patentansprüche aus.

Aus beispielsweise EP 0 898 254 B1 ist es bekannt, in einem Fahrzeug betriebene Geräte, insbesondere Autoradios, vor Diebstahl dadurch zu schützen, dass zur Inbetriebnahme eines Geräts ein Code eingegeben werden muss und die Inbetriebnahme nur dann freigegeben wird, wenn der eingegebene Code mit einem im Gerät hinterlegten Code übereinstimmt. Hierzu kann der Code über eine Tastatur oder mittels eines vom Gerät lesbaren Datenträgers in Form einer Chipkarte in das Gerät eingegeben werden.

Aus DE 10 2006 037 879 A1 sind weiterhin Dokumente mit integrierten elektonischen Schaltkreisen bekannt, die im Falle beispielsweise eines Reisepasses oder vergleichbaren personenbezogenen Ausweisdokuments, personenbezogene Daten enthalten können. Die im elektronischen Schaltkreis abgelegten Daten können mittels eines geeigneten Lesegeräts beispielsweise drahtlos gelesen werden. Diese Systeme sind auch als als RFID (Radio Frequency Identification) bekannt.

### Vorteile der Erfindung

Die Erfindung mit den Merkmalen der unabhängigen Patentansprüche bildet den vorgenannten Stand der Technik vorteilhaft weiter. Die Erfindung ermöglicht dabei die Realisierung eines an sich bekannten Diebstahlschutzes sowie einer Beschränkung einer Benutzung auf einen berechtigten Benutzer oder Personenkreis mit einfachen Mitteln und geringem Aufwand.

So ist es von besonderem Vorteil, dass zur Identifizierung eines Benutzers und gegebenenfalls Auslösung von Funktionen im Fahrzeug eine herkömmliches Identifikations-Dokument, nachfolgend auch ID-Dokument, verwendet werden kann, auf welchem maschinenlesbare, personenbezogene Identifikations-Informationen, nachfolgend auch ID-Informationen, gespeichert sind. Von diesem ID-Dokument werden zumindest ein Teil der darauf gespeicherten personenbezogenen ID-Informationen ausgewertet und zur Identifizierung des Benutzers und gegebenenfalls zur Freischaltung und/oder Auslösung von Funktionen verwendet.

Dies hat den Vorteil, dass der Benutzer sich keine separaten Codes für diverse Anwendungen mehr merken muss und dass er auch keine separaten CodeKarten oder Schlüssel oder dergleichen zur Freischaltung oder Auslösung von Funktionen mehr mit sich führen muss, sondern dass statt dessen nur noch das ID-Dokument mitgeführt werden muss. Alleine die Tatsache, dass vorzugsweise nur noch ein einziges ID-Dokument anstelle einer Mehrzahl von Schlüsseln, Codekarten und dergleichen mitgeführt werden muss, erhöht die Motivation, dieses auch tatsächlich stets mitzuführen. Damit wird auch das Risiko eines Missbrauchs durch unbefugte Dritte vermindert. Darüber hinaus ist es auch möglich, beispielsweise einen Fingerabdruck, einen Iris-Scan oder dergleichen auf dem ID-Dokument zu speichern und bei Verwendung des ID-Dokuments die entsprechenden Merkmale des Benutzers mit dazu geeigneten Erfassungsmitteln, wie Fingerabdruck- oder Irisscanner oder dergleichen aufzunehmen und mit entsprechenden Merkmalen des Benutzers abzugleichen. Auf diese Weise wird ein Missbrauch des ID-Dokuments durch Dritte auch bei Verlust, Diebstahl oder anderweitigem Abhandenkommen des ID-Dokuments verhindert.

Vorteilhaft werden die ID-Informationen auf dem ID-Dokument in elektronischer Form, insbesondere in einem elektronischen Speicherchip gespeichert. Insbesondere kommt hier die Verwendung der sogenannten, eingangs erwähnten RFID-Technik in Betracht, bei der die ID-Daten in einem elektronischen Speicher abgelegt und nach dem Transponderprinzip durch ein, hier fahrzeugseitiges, Lesegerät aus dem Speicher ausgelesen werden.

Hier Alternativ oder ergänzend können die oder ein Teil der ID-Information beispielsweise auch in anderer Form in dem ID-Dokument gespeichert werden, beipielsweise in codierter Form als Strichcode. Auch eine uncodierte Speicherung ist denkbar, insbesondere im Falle solcher ID-Informationen, die auch durch Sichtkontrolle des Dokumenteninhabers geprüft werden könnten, wie beispielsweise Fingerabdrücke oder dergleichen. Solche beispielsweise auf eine Oberfläche des ID-Dokuments oder Seite innerhalb eines mehrseitigen ID-Dokuments aufgedruckten ID-Informationen können beispielsweise mittels eines entsprechenden optischen Erfassungsgeräts im Fahrzeug ausgelesen werden.

Vorteilhaft wird ein amtlich ausgestelltes, maschinenlesbares Dokument, wie beispielsweise Personalausweis, Reisepass oder dergleichen verwendet, welches hohen Ansprüchen an Fälschungssicherheit genügt. Es fallen dann insbesondere auch keine zusätzlichen Kosten für zusätzliche Identifizierungsmittel an und es ist möglich, ohne zusätzlichen Aufwand an der steten Verbesserung der Sicherheitsstandards der das Dokument ausgebenden Behörden teilzuhaben.

### Zeichnungen

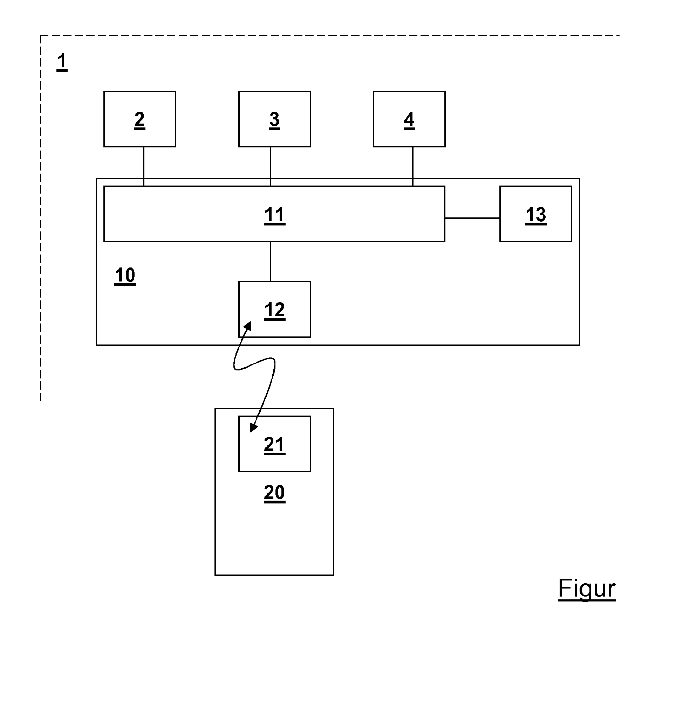

Ausführungsbeispiele der Erfindung sind in der Figur dargestellt und werden nachfolgend näher erläutert.

Die Figur zeigt ein vereinfachtes Blockschaltbild des erfindungswesentlichen Teils einer Anordnung zur Durchführung des erfindungsgemäßen Verfahrens, anhand dessen das Verfahren erläutert wird.

### Beschreibung der Ausführungsbeispiele

Das in der Figur dargestellte Fahrzeug 1 verfügt über eine Fahrzeugausstattung, beispielsweise umfassend ein Antriebssystem 2, eine Komfortausstattung 3, ein Fahrerinformationssystem 4 und gegebenenfalls weitere Ausstattung.

Das Antriebssystem 2 umfasst in an sich bekannter Weise die Komponenten des Triebstrangs, also im Vesentlichen Antriebsmaschine, Getriebe und dergleichen. Die Komfortausstattung 3 umfasst beispielsweise eine Klimaanlage, eine automatische Sitz- und Spiegeleinstellung und dergleichen. Das Fahrerinformationssystem 4 umfasst beispielsweise die Funktionalität eines Autoradios, eines Navigationssystems und einer Geschwindigkeitsanzeige und dergleichen mehr.

Weiterhin ist eine Einrichtung 10 zur Identifizierung eines Benutzers vorgesehen. Diese umfasst eine Steuerung 11 in Form eines Rechners mit einem Betriebsprogramm, ein Lesegerät 12 zum Lesen von ID-Daten von einem maschinenlesbaren ID-Dokument 20 sowie einen Abgleichdatenspeicher 13 zum Abspeichern von Identifikations- oder Verifikationsdaten für einen bestimmten, berechtigten Benutzer oder Benutzerkreis.

Um die oder einen Teil der Fahrzeugausstattung 2, 3, 4 in Betrieb zu nehmen, also beispielsweise den Motor 2 zu starten, das Autoradio 4 einzuschalten oder dergleichen, wird zunächst festgestellt, ob der Benutzer dazu berechtigt ist. Die Berechtigung des Benutzers wird durch die Steuerung 11 anhand eines Abgleichs von ID-Daten, die auf einem vom Benutzer mitzuführenden ID-Dokument 20 gespeichert sind, mit im Abgleichdatenspeicher 13 abgelegten Informationen geprüft. Dazu wird eine Datenabfrage über das Lesegerät 12 angestoßen, in deren Folge das Lesegerät 12 nach dem RFID-Verfahren ID-Informationen von einem RFID-Chip 21 eines ID-Dokuments 20 zu lesen versucht. Sofern der Benutzer ein ID-Dokument 20 mit RFID-Chip 21 mit sich führt, werden dessen Informationen nach dem Transponderprinzip vom Lesegerät 12 ausgelesen und nachfolgend von der Steuerung 11 mit den im Abgleichdatenspeicher 13 abgelegten Informationen abgeglichen. Sofern der Benutzer als Ergebnis dieses Datenabgleichs als autorisierter Benutzer erkannt worden ist, wird nun der Betrieb der Fahrzeugausstattung 2, 3, 4 freigeschaltet. Ist der Benutzer als nicht autorisierter Benutzer erkannt worden, bleibt hingegen der Betrieb der Fahrzeugausstattung vollständig oder teilweise blockiert.

Das ID-Dokument kann vorzugsweise ein an sich bekanntes, wie beispielsweise in DE 10 2006 037 879 A1 oder den darin genannten Schriften beschriebenes, amtliches Dokument, wie ein bereits eingeführter maschinenlesbarer Personalausweis, Reisepass oder beispielsweise ein in der EU aktuell diskutierter Führerschein mit Speicherchip sein. Ein solches maschinenlesbares ID-Dokument 20 umfasst in an sich bekannter Weise einen Speicherchip 21, in dem personenbezogene Informationen, wie insbesondere Name, Anschrift, Geburtsdaten und dergleichen, daneben auch beispielsweise ein Irisscan, ein digitalisierter Fingerabdruck oder andere personenbezogene Daten gespeichert sind. Der Speicherchip 21 ist mittels eines passenden Lesegeräts, wie hier des Lesegeräts 12 der Identifizierungseinrichtung 10, auslesbar. Dazu ist das Lesegerät 12 entsprechend angepasst. Beipsielsweise kann der Speicherchip 12 über an einer Oberfläche des ID-Dokuments 20 angeordnete Kontaktflächen, wie von herkömmlichen Chipkarten nach ISO 7816 bekannt, kontaktiert und ausgelesen werden. Bevorzugt ist der Speicherchip 21 jedoch als RFID-Chip ausgeführt und kann somit berührungslos über vom Lesegerät 12 ausgestrahlte Funkwellen ausgelesen werden. Hierzu kann insbesondere die Transpondertechnik verwandt werden, wobei der im ID-Dokument integrierte Transponder die in den Abfrage-Funksignalen des Lesegeräts 12 enthaltene Energie zwischenspeichert und zum Aussenden der im Speicherchip 21 enthaltenen Informationen an das Lesegerät 12 nutzt.

Das ID-Dokument 20 kann neben den im Speicher 21 abgelegten Informationen, wie bereits erwähnt auch anderweit gespeicherte, beispielsweise auf einer Oberfläche aufgedruckte ID-Informationen aufweisen. Wenn diese ausgewertet werden sollen, ist das Lesegerät 12 entsprechend anzupassen, beispielsweise um einen optischen Leser zum Scannen von aufgedruckten Fingerabdrücken oder dergleichen.

Die Abgleichinformationen, mit denen die von dem ID-Dokument gelesenen ID-Informationen abgeglichen werden, können vorteilhaft beispielsweise bei der amtlichen Zulassung des Fahrzeugs auf einen bestimmten Fahrzeughalter in den Abgleichdatenspeicher 13 geschrieben werden. Alternativ wäre auch eine Konfiguration auf den Halter bei Verkauf des Fahrzeugs durch den Händler oder bei Bestellung des Fahrzeugs von Seiten des Herstellers schon bei der Produktion des Fahrzeugs möglich. Hierzu alternative Möglichkeiten sind denkbar und liegen im Bereich der Erfindung.

Weiterhin können nach Autorisierung durch einen berechtigten Benutzer auch weitere Benutzer als berechtigte Benutzer registriert werden. Hierzu können in einem Anlernmodugs nach Freischalten des Zugangs zum Fahrzeug 1 bzw. dessen Ausstattung 2, 3, 4 ID-Informationen eines weiteren Benutzers von dessen ID-Dokument 20' gelesen und daraus erzeugte Abgleichinformationen im Abgleichdatenspeicher 13 abgelegt werden. Diese Möglichkeit der Freigabe der Nutzung für einen weiteren Benutzer hat den Vorteil, dass der ursprüngliche Benutzer sein ID-Dokument nicht an den weiteren Benutzer weitergeben muss, wenn dieser das Fahrzeug 1 oder dessen Ausstattung 2, 3, 4 benutzen möchte. Somit kann das ID-Dokument 20 vom Benutzer bzw. Eigentümer stets mitgeführt werden.

Es ist weiterhin denkbar, dass eine solche ID-Dokument- bzw- ID-Informationsabhängige Freischaltung des Fahrzeugs 1 oder dessen Ausstattung 2, 3, 4 auch für einen begrenzten zeitlichen Zeitraum erfolgen kann. Hierzu können die ID-Informationen oder die daraus abgeleiteten Abgleichinformationen im Abgleichspeicher 13 mit einem Verfallsdatum versehen werden, nach dessen Ablauf die Daten automatisch gelöscht werden oder die Benutzung für den temporär freigeschalteten Benutzer durch die Steuerung 11 gesperrt wird. Diese Lösung ist beispielsweise für Mietfahrzeuge von besonderem Interesse.

Weiterhin ermöglicht die Notwendigkeit der Identifizierung des Benutzers auch eine personenbezogene Erhebung von Mautgebühren und dergleichen. Schließlich kann auch ein Fahrzeugbenutzer beispielsweise bei Unfallflucht oder dergleichen leichter ermittelt werden. Hierzu ist es von besonderem Vorteil, wenn mit der Identifizierungseinrichtung ein Fahrtenschreiber verbunden ist, in dem die ID-Daten, Benutzungszeiten und evtl. auch Fahrstrecken der Benutzer aufgezeichnet werden.

Weiter ist es auch möglich, benutzerabhängige Profile abzuspeichern, wenn mehrere Benutzer autorisiert sind. Beispielsweise können bevorzugte Stationstastenbelegungen oder Klangeinstellungen eines Autoradios 4 benutzerabhängig gespeichert sein und bei Identifizierung des Benutzers an der betroffenen Fahrzeugausstattung, hier also beispielsweise dem Autoradio 4, automatisch voreingestellt werden. Ähnliches gilt beispielsweise für eine Sitz-, Lenkrad- oder Spiegeleinstellung im Fahrzeug oder dergleichen mehr.

## Patentansprüche

1. Verfahren zur Identifizierung eines Benutzers in einem Fahrzeug (1), wobei ID-Informationen von einem personenbezogenen ID-Dokument (20) gelesen werden, welches ID-Dokument (20) maschinenlesbare personenbezogene ID-Informationen aufweist, und wobei im Fahrzeug (1) Funktionen (2, 3, 4) in Abhängigkeit der gelesenen ID-Informationen freigegeben und/oder ausgelöst werden.

2. Verfahren nach Anspruch 1, **dadurch gekennzeichnet, dass** die von dem ID-Dokument (20) gelesenen ID-Informationen mit in einem Abgleichspeicher (13) gespeicherten Abgleichinformationen abgeglichen werden.

3. Verwendung eines personenbezogenen ID-Dokuments (20) zur Identifizierung eines Benutzers in einem Fahrzeug (1), wobei im Fahrzeug Mittel (12) zur Erfassung von in einem Speicher (21) des ID-Dokuments (20) abgelegten ID-Informationen vorgesehen sind und wobei Im Fahrzeug (1) Funktionen (2, 3, 4) in Abhängigkeit der von einem ID-Dokument (20) erfassten ID-Informationen freigegeben und/oder ausgelöst werden.

4. Anordnung zur Identifizierung eines Benutzers in einem Fahrzeug (1), mit einem Lesegerät (12) zum Lesen von ID-Informationen von einem personenbezogenen ID-Dokument (20), welches ID-Dokument (20) maschinenlesbare personenbezogene ID-Informationen aufweist, und mit Mitteln (11) zur Freigabe oder zum Auslösen von Funktionen (2, 3, 4) im Fahrzeug (1) in Abhängigkeit der gelesenen ID-Informationen.
